# EUROPÄISCHE PATENTANMELDUNG

(11) **EP 1 801 134 A1**
(43) Veröffentlichungstag der Anmeldung: **27.06.2007**
(21) Anmeldenummer: 06025544.5
(22) Anmeldetag: 11.12.2006
(51) Int. Cl.: C08F 8/50, C08C 19/08

(54) **Synthetischer Kautschuk mit enger Molekulargewichtsverteilung, seine Verwendung und ein Verfahren zu seiner Herstellung**

(30) Priorität: 21.12.2005 DE 102005061627
(71) Anmelder: LANXESS Deutschland GmbH, 51369 Leverkusen (DE)
(72) Erfinder: Reif, Lothar, Dr., 41541 Dormagen (DE); Pask, Stephen, Dr., 41542 Dormagen (DE)

(57) **Zusammenfassung**

Durch ein neues Verfahren werden synthetische Kautschuke (B) hergestellt, die sich durch eine sehr enge Molekulargewichtsverteilung und einen entsprechend niedrigen Wert für den Polydispersitätsindex auszeichnen. Die Herstellung umfasst die Behandlung eines synthetischen Kautschuks mit Ultraschall, wobei der erhaltene synthetische Kautschuk (B) ein niedrigeres Gewichtsmittel des Molekulargewichts (M_{w}) besitzt als der eingesetzte synthetische Kautschuk (A). Die so erhaltenen synthetische Kautschuke (B) sind exzellent geeignet zur Verarbeitung durch Extrusions- oder Spritzgussverfahren.

## Beschreibung

Die Erfindung betrifft ein Verfahren zur Herstellung von niedermolekularen Synthesekautschuken mit enger Molekulargewichtsverteilung durch Behandlung von molekular breit verteilten Ausgangspolymeren der jeweiligen chemischen Struktur mit Ultraschall.

Synthesekautschuk wird in einer großen Vielfalt verschiedener chemischer Strukturen mit den unterschiedlichsten Polymerisations- und Aufarbeitungsverfahren hergestellt. Einen Überblick gibt Ullmann's Encyclopedia of Industrial Chemistry, VCH Weinheim, 1993, Vol A23, S. 239 ff. und dort zitierte Literatur.

Den meisten dieser Synthesekautschuke ist gemeinsam, dass sie ein hohes Molekulargewicht aufweisen gepaart mit einer breiten Molekulargewichtsverteilung. Diese breite Molekulargewichtsverteilung ist eine Folge der Tatsache, daß der bei weitem größte Anteil synthetischer Kautschuke in einem radikalischen Polymerisationsverfahren gewonnen wird, welches in der Regel Polydispersitätsindizes D = M_{w} /Mₙ, wobei M_{w} das Gewichtsmittel und Mₙ das Zahlenmittel des Molekulargewichts darstellt, größer als 1,5, im Normalfall bei Emulsionskautschuken sogar größer als 3,0 liefert. Der Polydispersitätsindex D (Bestimmungsmethode: Gelpermeationschromatographie (GPC) gegen Polystyrol-Äquivalente) liefert eine Aussage über die Breite der Molekulargewichtsverteilung.

Engere Molekulargewichtsverteilungen liefert prinzipiell die anionische Polymerisation in Lösung, wobei Polydispersitätsindizes D nur wenig größer als 1,0, typischerweise bei kommerziell erhältlichen Polymeren wie z.B. Lösungs-Styrol-Butadien-Kautschuk (LSBR) um den Wert D=2,0 üblich sind. Dieses Verfahren ist jedoch nur auf eine geringe Menge der zahlreichen chemisch unterschiedlich aufgebauten synthetischen Kautschuke anwendbar.

Ein im Wesentlichen im letzten Jahrzehnt entwickeltes Verfahren zur Herstellung eng verteilter Polymerer nach einem radikalisch initiierten Verfahren ist die sogenannte "living radical polymerization". Bis auf wenige Ausnahmen existieren jedoch bis heute noch keine kommerziellen Anwendungen dieser im Vergleich zu Standardverfahren aufwändigen Technik. Einen Überblick über den gegenwärtigen Stand der Technik gibt Matyjaszewski (Advances in Polymer Science, Vol. 159, Springer-Verlag Berlin Heidelberg 2002, S. 2-166).

Im Kautschukbereich zeigen die Formteile, die aus eng verteilten Polymeren hergestellt wurden, im Vergleich zu herkömmlichen Teilen eine verbesserte Eigenschaftscharakteristik. Dies ist auf ein homogeneres Netzwerk zurückzuführen, das eine geringere Anzahl sogenannter loser Enden aufweist. Besonders deutlich wird dies bei einem Vergleich von mit anionischer Technik hergestelltem eng verteilten Lösungs-SBR mit dem entsprechendem Produkt aus einer radikalischen Polymerisation (Emulsions-SBR).

Somit bestand die Aufgabe der vorliegenden Erfindung darin, ein Verfahren bereitzustellen, mit dem ein synthetischer Kautschuk hergestellt werden kann, der eine engere Molekulargewichtsverteilung, respektive einen kleineren Polydispersitätsindex als die bisher bekannten aufweist, und gleichzeitig auch niedrige Werte des Gewichtsmittel des Molekulargewichts besitzt.

Überraschenderweise wurde gefunden, dass sich das Molekulargewicht von synthetischen Kautschuken vorteilhafterweise durch die Einwirkung von Ultraschall abbauen lässt und synthetische Kautschuke verringerten Molekulargewichts bereitgestellt werden können, die zusätzlich auch eine deutlich engere Molekulargewichtsverteilung und somit einen kleineren Polydispersitätsindex aufweisen als es durch Polymerisationsverfahren alleine in vielen Fällen möglich ist.

Gegenstand der vorliegenden Erfindung ist somit ein Verfahren zur Herstellung eines synthetischen Kautschuks (B), welches dadurch gekennzeichnet ist, dass man einen synthetischen Kautschuk (A) der Einwirkung von Ultraschall aussetzt, wobei der erhaltene synthetische Kautschuk (B) ein niedrigeres Gewichtsmittel des Molekulargewichts M_{w} besitzt als der synthetische Kautschuk (A).

Im erfindungsgemäßen Verfahren werden synthetische Kautschuke (A) als Startmaterialien eingesetzt. Geeignet sind beispielsweise:
- NBR: Nitrilkautschuke in Form von Butadien-Acrylnitril-Co- oder Terpolymeren,
- HNBR: teilweise oder vollständig hydrierte Nitrilkautschuke in Form hydrierter Butadien-Acrylnitril-Co- oder Terpolymere,
- XNBR: carboxylierte Nitrilkautschuke,
- HXNBR: teilweise oder vollständig hydrierte carboxylierte Nitrilkautschuke,
- EVM: Ethylen-Vinylacetat-Copolymere
- EPDM: Ethylen-Propylen-Dien-Copolymere,
- ESBR: Styrol-Butadien-Copolymere
- CR: Polychloropren,
- BR: Polybutadien,
- ACM: Acrylatkautschuk,
- FKM: Fluorkautschuk,
- IIR: Isobutylen-Isopren-Copolymere, üblicherweise mit Isoprengehalten von 0,5-10 Gew. %,
- BIIR: bromierte Isobutylen-Isopren-Copolymere, üblicherweise mit Bromgehalten von 0,1-10 Gew.%,
- CIIR: chlorierte Isobutylen-Isopren-Copolymere, üblicherweise mit Chlorgehalten von 0,1-10 Gew.%,
- ABR: Butadien-Acrylsäure-C₁₋₄-alkylester-Copolymere,
- IR: Polyisopren,
- X-SBR: carboxylierte Styrol-Butadien-Copolymere
- EAM: Ethylen-Acrylat-Copolymere,
- CO und:
- ECO: Epichlorhydrinkautschuke,
- Q: Silikonkautschuke,
- AU: Polyesterurethanpolymerisate,
- EU: Polyetherurethanpolymerisate
- ENR: Epoxydierter Naturkautschuk oder Mischungen davon.

### Nitrilkautschuke (NBR)

Unter **Nitrilkautschuken**, die auch als NBR abgekürzt werden, werden im Rahmen dieser Anmeldung Co- oder Terpolymere verstanden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das **konjugierte Dien** kann von jeder Natur sein. Bevorzugt werden C₄-C₆-konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind C₃-C₅-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt ein Copolymer aus Acrylnitril und 1,3-Butadien dar.

Neben dem konjugierten Dien und dem α,β-ungesättigten Nitril können noch ein oder mehrere weitere dem Fachmann bekannte Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxalkylyester der α,β-ungesättigten Carbonsäuren sind Methoxyethyl(meth)acrylat und Ethoxyethyl(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.% und bevorzugt im Bereich von 55 bis 75 Gew. %, bezogen auf das Gesamtpolymer. Der Anteil des oder der Summe der α,β-ungesättigten Nitrile liegt üblicherweise bei 10 bis 60 Gew.-%, bevorzugt bei 25 bis 45 Gew.-%, bezogen auf das Gesamtpolymer. Die Anteile der Monomere summieren sich jeweils zu 100 Gew.% auf. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Sofern der Nitrilkautschuk über Carboxylgruppen verfügt, spricht man auch von XNBR.

Die Herstellung der Nitrilkautschuke durch Polymerisation der vorgenannten Monomere ist dem Fachmann hinlänglich bekannt und in der Literatur (z.B. Houben-Weyl, Methoden der Organischen Chemie Bd. 14/1, Georg Thieme Verlag Stuttgart 1961) umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

### Hydrierte Nitrilkautschuke (HNBR)

Unter hydrierten Nitrilkautschuken (HNBR) werden im Rahmen dieser Anmeldung Co- oder Terpolymere verstanden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten und bei denen die C=C Doppelbindungen der einpolymerisierten Dieneinheiten ganz oder teilweise hydriert sind. Der Hydriergrad der einpolymerisierten Dieneinheiten liegt üblicherweise in einem Bereich von 50 bis 100%, bevorzugt in einem Bereich von 85 bis 100% und besonders bevorzugt in einem Bereich von 95 bis 100%.

Das **konjugierte Dien** kann von jeder Natur sein. Bevorzugt werden C₄-C₆-konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind C₃-C₅-α,β-ungesättigte Nitrile wie Acrylnitril, Methacrylnitril, Ethacrylnitril oder Mischungen davon. Besonders bevorzugt ist Acrylnitril.

Einen besonders bevorzugten hydrierten Nitrilkautschuk stellt ein hydriertes Copolymer auf Basis der Monomere Acrylnitril und 1,3-Butadien dar.

Neben dem konjugierten Dien und dem α,β-ungesättigten Nitril können noch ein oder mehrere weitere dem Fachmann bekannte Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Ester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat.

Die Anteile an konjugiertem Dien und α,β-ungesättigtem Nitril in den einzusetzenden HNBR-Polymeren können in weiten Bereichen schwanken. Der Anteil des oder der Summe der konjugierten Diene liegt üblicherweise im Bereich von 40 bis 90 Gew.% und bevorzugt im Bereich von 55 bis 75 Gew. %, bezogen auf das Gesamtpolymer. Der Anteil des oder der Summe der α,β-ungesättigten Nitrile liegt üblicherweise bei 10 bis 60 Gew.-%, bevorzugt bei 25 bis 45 Gew.-%, bezogen auf das Gesamtpolymer. Die Anteile der Monomere summieren sich jeweils zu 100 Gew.% auf. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Sofern der hydrierte Nitrilkautschuk über Carboxylgruppen verfügt, spricht man auch HXNBR.

Zunächst werden die Nitrilkautschuke, NBR, durch Polymerisation der vorgenannten Monomere hergestellt. Danach erfolgt die Hydrierung der Nitrilkautschuke zu hydriertem Nitrilkautschuk. Dies kann in der dem Fachmann bekannten Art und Weise erfolgen. Geeignet ist beispielsweise die Umsetzung mit Wasserstoff unter Einsatz homogener Katalysatoren, wie z.B. dem als "Wilkinson"-Katalysator ((PPh₃)₃RhCl) bekannten oder anderen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B.US-A-3,700,637, DE-PS-2 539 132, EP-A- 134 023, DE-OS- 35 41 689, DE-OS- 35 40 918, EP-A-298 386, DE-OS- 35 29 252, DE-OS- 34 33 392, US-A-4,464,515 und US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)₁ RhXₙ

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet,
- 1: 2,3 oder 4 ist,
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis-(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkylmonocycloalkyl- oder Dicycloalkylmonoaryl-Resten.

Geeignete Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.%, bezogen auf das Gewicht des zu hydrierenden Nitrilkautschuks, eingesetzt. Bevorzugt ist ferner das Gewichtsverhältnis des Rhodium-haltigen Katalysators zum Co-Katalysator im Bereich von 1:3 bis 1:55, bevorzugt im Bereich von 1:5 bis 1:45. Geeigneterweise werden 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen C=C Doppelbindungen verstanden, die üblicherweise zu mindestens 50 %, bevorzugt zu mindestens 85 %, besonders bevorzugt zu mindestens 95 % erfolgt, bezogen auf die im Ausgangs-Nitrilkautschuk vorhandenen Doppelbindungen.

Die hydrierten Nitrilkautschuke, die im erfindungsgemäßen Verfahren als Ausgangsmaterial eingesetzt werden, besitzen üblicherweise ein Gewichtsmittel des Molekulargewicht M_{w} im Bereich von 200.000 bis 1.000.000, bevorzugt im Bereich von 200.000 bis 400.000 und insbesondere bevorzugt im Bereich von 200.000 bis 300.000. Sie besitzen ferner einen Polydispersitätsindex D= M_{w}/Mₙ, wobei M_{w} das Gewichtsmittel und Mₙ das Zahlenmittel des Molekulargewichts darstellt, im Bereich von 1,9 bis 6,0 , bevorzugt im Bereich von 2,2 bis 5,0 und insbesondere im Bereich von 2,5 bis 4,0.

Die Mooney-Viskosität der im erfindungsgemäßen Verfahren eingesetzten hydrierten Nitrilkautschuke (A) (ML 1+4 @100 °C) liegt im Bereich von 50 bis 130 , bevorzugt von 55 bis 75. Die Bestimmung der Mooney-Viskosität erfolgt dabei gemäß ASTM Norm D1646.

Derartige hydrierte Nitrilkautschuke sind im Handel erhältlich. Beispiele für hydrierte Nitrilkautschuk sind voll- und teilhydrierte Nitrilkautschuke mit Acrylnitrilgehalten im Bereich 20 bis 50 Gew.% (Therban^{®}-Palette der Lanxess Deutschland GmbH sowie Zetpol^{®}-Palette der Nippon Zeon Corporation). Beispiele für hydrierte Butadien/Acrylnitril/Acrylat-Polymere finden sich in der Therban^{®}LT-Serie der Lanxess Deutschland GmbH, beispielsweise Therban^{®}LT 2157 sowie Therban^{®}VP KA 8882. Ein Beispiel für carboxylierte hydrierte Nitrilkautschuke ist die Therban^{®}XT-Serie der Lanxess Deutschland GmbH. Beispiele für hydrierte Nitrilkautschuke mit geringen Mooney-Viskositäten und daher verbesserter Verarbeitbarkeit sind Produkte aus der Therban^{®} AT-Serie, beispielweise Therban AT VP KA 8966.

### Ethylen-Vinylacetat-Copolymere (EVM)

Im erfindungsgemäßen Verfahren einsetzbar sind auch Ethylen-Vinylacetat-Copolymere auf der Basis von Ethylen und Vinylacetat als Monomere.

Ethylen-Vinylacetat-Copolymere, die im erfindungsgemäßen Sinn verwendet werden können, sind käuflich erhältlich, z.B. als Produkte aus der Produktreihe der Marke Levapren^{®} und Levamelt^{®} von der Lanxess Deutschland GmbH, oder aber auch nach dem Fachmann geläufigen Methoden herstellbar.

### EPDM Kautschuke

Bei EPDM Kautschuken handelt es sich um Polymere, die durch Terpolymerisation von Ethylen und größeren Anteilen Propylen sowie einigen Gew.% eines dritten Monomeren mit Dien-Struktur hergestellt werden. Das Dien-Monomer stellt dabei die für eine sich ggf. anschließende Schwefel-Vulkanisation benötigten Doppelbindungen bereit. Als Dien-Monomere finden vorwiegend *cis,cis-*1,5-Cyclooctadien (COD), *exo*-Dicyclopentadien (DCP), *endo*-Dicyclopentadien (EDCP), 1,4-Hexadien (HX) und auch 5-Ethyliden-2-norbornen (ENB) Verwendung.

EPDM Kautschuken, die im erfindungsgemäßen Sinn verwendet werden können, sind käuflich erhältlich, z.B. als Produkte aus der Produktreihe der Marke Buna EP^{®} von der Lanxess Buna GmbH, oder aber auch nach dem Fachmann geläufigen Methoden herstellbar.

### Emulsions-Styrol-Butadien-Kautschuk (ESBR)

Hierbei handelt es sich jeweils um Copolymere aus den Monomeren Styrol und Butadien. Ihre Herstellung erfolgt durch Emulsionspolymerisation in Wasser, die mit Redoxinitiatoren bei tiefen Temperaturen bzw. bei höheren Temperaturen mit Persulfaten gestartet wird. Erhalten werden Latices, die als solche verwendet oder auch zu festem Kautschuk aufgearbeitet werden. Die Molmassen von ESBR liegen im Bereich von ca. 250.000 bis 800.000 g/mol.

Emulsions-Styrol-Butadien-Kautschuke, die im erfindungsgemäßen Sinn verwendet werden können, sind käuflich erhältlich, z.B. als Produkte aus der Produktreihe der Marke Krynol^{®} und Krylene^{®} von der Lanxess Deutschland GmbH, oder aber auch nach dem Fachmann geläufigen Methoden herstellbar.

### Chloropren-Kautschuk (CR)

Bei Chloropren-Kautschuken (CR) handelt es sich um Polymere auf der Basis von Chloropren (Chlor-1,3-butadien), die technisch durch Emulsionspolymerisation hergestellt werden. Neben Chloropren können zur Herstellung von CR auch noch ein oder mehrere weitere Monomere eingesetzt werden.

Chloropren-Kautschuke (CR), die im erfindungsgemäßen Sinn verwendet werden können, sind käuflich erhältlich, z.B. als Produkte aus der Produktreihe der Marke Baypren^{®} von der Lanxess Deutschland GmbH, oder aber auch nach dem Fachmann geläufigen Methoden herstellbar.

### Polybutadien-Kautschuke (BR)

Hierbei handelt es sich um Poly(1,3-butadien), ein Polymer auf Basis des 1,3-Butadiens.

### Acrylatkautschuke (ACM)

Bei Acrylatkautschuken handelt es sich um radikalisch in Emulsion hergestellte Copolymere von Ethylacrylat mit anderen Acrylaten wie Butylacrylat, 2-Alkoxyethylacrylaten oder anderen mit kleinen Anteilen einpolymerisierter vulkanisationsaktiver Gruppen.

ACM Kautschuke, die im erfindungsgemäßen Sinn verwendet werden können, sind käuflich erhältlich, z.B. als Produkte aus der Produktreihe der Marke Hy Temp^{®}/Nipol^{®} AR von Zeon Chemicals, oder aber auch nach dem Fachmann geläufigen Methoden herstellbar.

### Fluorkautschuke (FKM)

Dabei handelt es sich um radikalisch in Emulsion hergestellte Copolymere von fluorierten Ethylenmonomeren mit fluorierten Vinylmonomeren sowie gegebenenfalls weiteren Monomeren, die vulkanisationsaktive Gruppen tragen.

FKM Kautschuke, die im erfindungsgemäßen Sinn verwendet werden können, sind käuflich erhältlich, z.B. als Produkte aus der Produktreihe der Marke Viton^{®} von DuPont des Nemours, oder aber auch nach dem Fachmann geläufigen Methoden herstellbar.

### IIR und Halo IIR (BIIR und CIIR)

Butylkautschuke (IIR) stellen ein Copolymer aus Isobuten und kleinen Anteilen von Isopren dar. Sie werden nach einem kationischen Polymerisationsverfahren hergestellt. Halobutylkautschuke (BIIR und CIIR) werden daraus durch Reaktion mit elementarem Chlor oder Brom hergestellt.

Butylkautschuke und Halobutylkautschuke, die im erfindungsgemäßen Sinn verwendet werden können, sind käuflich erhältlich, z.B. als Produkte aus der Produktreihe der Marke Lanxess Butyl und Lanxess Chlorobutyl bzw. Lanxess Bromobutyl der Lanxess Deutschland GmbH, oder aber auch nach dem Fachmann geläufigen Methoden herstellbar.

Weitere Einzelheiten zur Herstellung aller vorgenannter synthetischen Kautschuke (A) durch Polymerisation der entsprechenden Monomere kann der Fachmann auch aus der Literatur (z.B. Houben-Weyl, Methoden der Organischen Chemie Bd.14/1, Georg Thieme Verlag Stuttgart 1961) entnehmen.

Die synthetischen Kautschuke (A), wie z.B. die zuvor genannten, die im erfindungsgemäßen Verfahren als Ausgangsmaterial eingesetzt werden, besitzen üblicherweise ein Gewichtsmittel des Molekulargewicht M_{w} im Bereich von 200.000 bis 1.000.000, bevorzugt im Bereich von 200.000 bis 400.000 und insbesondere bevorzugt im Bereich von 200.000 bis 300.000. Sie besitzen ferner eine Polydispersität D= M_{w}/Mₙ, wobei M_{w} das Gewichtmittel und Mₙ das Zahlenmittel des Molekulargewichts darstellt, im Bereich von 1,9 bis 6,0 , bevorzugt im Bereich von 2,2 bis 5,0 und insbesondere im Bereich von 2,5 bis 4,0.

Die Mooney-Viskosität der im erfindungsgemäßen Verfahren eingesetzten synthetischen Kautschuke (A) (ML 1+4 @100°C) liegt im Bereich von 40 bis 130 , bevorzugt von 45 bis 130, besonders bevorzugt von 55 bis 75. Die Bestimmung der Mooney-Viskosität erfolgt dabei gemäß ASTM Norm D1646.

Unter der erfindungsgemäßen Einwirkung von Ultraschall wird der Eintrag von Schallenergie mit einer Frequenz von mindestens 18 kHz, bevorzugt im Bereich von 18 bis 30 kHz und insbesondere im Bereich von 19 bis 25 kHz verstanden.

Dabei ist der Eintrag der Energie abhängig von der eingestrahlten Frequenz. Der Energieeintrag ist um so niedriger, je höher die Frequenz ist. Von "Ultraschall hoher Energie" spricht man bei Frequenzen bis 100 kHz. Ganz besonders bevorzugt ist hier die Verwendung von Ultraschall mit einer Frequenz im Bereich um 20 kHz.

Der Eintrag der Energie erfolgt durch Eintauchen einer Sonotrode in eine Lösung des zu behandelnden synthetischen Kautschukes (A) in einem Lösungsmittel.

Das erfindungsgemäße Verfahren kann sowohl diskontinuierlich als auch kontinuierlich durchgeführt werden.

Bei diskontinuierlicher Durchführung, d.h. einer "batch"-Fahrweise, wird in einem gerührten oder einem ungerührten Reaktor gearbeitet.

Ebenso möglich ist die Durchführung des Energieeintrags bei kontinuierlicher Fahrweise. Hierbei kann beispielsweise ein durchströmter Reaktor im "CSTR"-Modus (continuous stirred tank reactor) verwendet werden, der einmalig oder mehrmals in "Kreis"-Fahrweise betrieben wird. Mehrere hintereinander in Serie geschaltete CSTRs können ebenfalls zur Durchführung des erfindungsgemäßen Verfahrens eingesetzt werden. Gleichermaßen geeignet ist ein kontinuierlich durchströmter Rohrreaktor bei Einsatz einer entsprechenden Anzahl von Sonotroden.

Die Einwirkung des Ultraschalls auf die synthetischen Kautschuke (A) erfolgt in Lösung. Hierbei werden die Molekülketten durch Aufbringen mechanischer Kräfte gespalten (siehe auch "Applied Sonochemistry", Herausgeber: T.J.Mason, J.P.Lorimer, Wiley-VCH Verlag, Weinheim, 2002). Die hohen Scherkräfte, die für die Molekülketten zur Spaltung führen, entstehen durch "Kavitation". Dies bezeichnet das Entstehen und das schlagartige Kollabieren von Gasblasen in einer Flüssigkeit.

Als Lösungsmittel kann jedes für den jeweiligen Kautschuk geeignete Lösungsmittel dienen, wie beispielsweise Dichlormethan, Benzol, Toluol, Cyclohexan und andere.

Die Konzentration des synthetischen Kautschuks (A) im Lösungsmittel ist nur durch die sich einstellende Viskosität der Lösung limitiert. Es ist jedoch festzustellen, dass der Molekulargewichtsabbau um so effektiver fortschreitet, je niedriger die Konzentration bei ansonsten gleichen Bedingungen ist. Üblicherweise wird mit einer anfänglichen Konzentration des synthetischen Kautschuks (A) im Bereich von 0,5 bis 15 Gew.% , bevorzugt im Bereich von 1,0 bis 7,5 Gew.% im Lösungsmittel gearbeitet.

Der Eintrag der Ultraschallenergie ist in einem weiten Temperatur- und Druckbereich möglich. Üblicherweise wird das erfindungsgemäße Verfahren bei einer Temperatur im Bereich von -30 bis 100°C durchgeführt. Es hat sich gezeigt, dass tiefe Temparaturen einen positiven Einfluß auf die Kettenabbaureaktion haben. Vorzugsweise wird daher das erfindungsgemäße Verfahren bei Temperaturen im Bereich von -20 bis 50°C durchgeführt.

Üblicherweise wird das erfindungsgemäße Verfahren in einem Druckbereich von 1 bis 5 bar durchgeführt.

Selbstverständlich können im erfindungsgemäßen Verfahren auch Mischungen verschiedener synthetischen Kautschuke (A) eingesetzt und der Ultraschallbehandlung ausgesetzt werden. Entsprechend wird dann auch eine Mischung synthetischer Kautschuke (B) erhalten.

Die im erfindungsgemäßen Verfahren erhaltenen synthetischen Kautschuke (B) zeichnen sich durch eine besonders enge Molekulargewichtsverteilung und einen entsprechend niedrigen Wert für den Polydispersitätsindex aus.

Gegenstand der Erfindung sind ferner synthetische Kautschuke ausgewählt aus der Gruppe bestehend aus Nitrilkautschuken (NBR), hydrierten Nitrilkautschuken (HNBR), Ethylen-Vinylacetat-Copolymeren (EVM), EPDM Kautschuken, Emulsions-Styrol-Butadien-Kautschuk (ESBR), Chloropren-Kautschuken (CR), Polybutadien-Kautschuken (BR), Acrylat-Kautschuken (ACM), Fluorkautschuken (FKM), IIR und Halo IIR, bevorzugt BIIR und CIIR, die eine Polydispersität D = M_{w}/Mₙ aufweisen, die kleiner oder gleich 2, bevorzugt kleiner 2, besonders bevorzugt kleiner als 1,9 und ganz besonders bevorzugt kleiner als 1, 7 ist. Insbesondere ist D größer als 1 und kleiner als 2,0, insbesondere bevorzugt ist D größer als 1 und kleiner als 1,9.

Die im erfindungsgemäßen Verfahren erhaltenen synthetische Kautschuke (B) besitzen ein niedrigeres Gewichtsmittel des Molekulargewicht M_{w} als die eingesetzten synthetischen Kautschuke (A). Das Gewichtsmittel des Molekulargewichts M_{w} der synthetischen Kautschuke (B) liegt üblicherweise im Bereich von 30.000 bis 250.000, bevorzugt im Bereich von 30.000 bis 150.000 und insbesondere bevorzugt im Bereich von 30 000 bis 100 000.

Die Mooney-Viskosität der im erfindungsgemäßen Verfahren erhaltenen synthetischen Kautschuke (B) (ML 1+4 @ 100 °C) liegt im Bereich von 1 bis 50, bevorzugt von 10 bis 40. Die Bestimmung der Mooney-Viskosität erfolgt dabei gemäß ASTM Norm D 1646.

Überraschenderweise gelingt somit auf diesem Weg der Ultraschallbehandlung erstmals die Bereitstellung von synthetischen Kautschuken, die eine gegenüber den aus der Polymerisation erhaltenen synthetischen Kautschuken extrem enge Molekulargewichtsverteilung aufweisen. Offensichtlich scheint die Spaltung der chemischen Bindungen am eingesetzten synthetischen Kautschuk durch den mechanischen Spaltungsprozeß im Gegensatz zu einer chemischen Bindungsspaltung nicht statistisch zu erfolgen, d.h. nicht alle Bindungen der Polymerkette sind gleich "reaktiv".

Die erfindungsgemäßen synthetischen Kautschuke niedrigen Molekulargewichts und enger Molekulargewichtsverteilung sind sehr gut verarbeitbar.

Gegenstand der Erfindung ist auch die Verwendung der erfindungsgemäßen synthetischen Kautschuke ausgewählt aus der oben genannten Gruppe zur Herstellung von Formkörpern, bevorzugt von solchen, die durch Extrusion oder Spritzguss hergestellt werden.

Gegenstand der Erfindung sind ferner Formteile, die aus den erfindungsgemäßen synthetischen Kautschuken, welche ausgewählt aus der oben genannten Gruppe sind, hergestellt werden. Die hierfür beispielsweise einsetzbaren Methoden wie Spritzguss- oder Extrusionsverfahren sowie die entsprechende Spritzgiessvorrichtungen oder Extruder sind dem Fachmann hinlänglich bekannt. Bei der Herstellung dieser Formteile können den erfindungsgemäßen synthetischen Kautschuken, ausgewählt aus der oben genannten Gruppe noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Bevorzugt werden aus den erfindungsgemäßen synthetischen Kautschuken aus der oben genannten Gruppe beispielsweise Dichtungen, Schläuche, Dämpfungselemente, Statoren oder Kabelmäntel hergestellt.

Weiterhin möglich ist es die erfindungsgemäß hergestellten synthetischen Kautschuke zur Herstellung von Reifen zu verwenden.

### Beispiele

Die Bestimmung des Fortschritts der Kettenabbaureaktion erfolgt durch Gelpermeationschromatographie (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT und einer Säulenkombination aus 3 "mixed-B" Säulen von Polymer Labs. Als Lösungsmittel diente Tetrahydrofuran, die erhaltenen Molekulargewichte beziehen sich auf Polystyrol-Standards der Fa. PSS (Mainz).

Die Bestimmung der molekularen Parameter wie Zahlenmittel des Molekulargewichts Mₙ, Massenmittel des Molekulargewichts M_{w} und dem daraus resultierenden Polydispersitätindex D erfolgt aus dem RI-Signal mittels der Software "Millennium" der Fa. Waters.

### Beispiel 1-3 (Nitrilkautschuk (NBR), batch Fahrweise)

160 g einer Lösung von 1 Gew.% NBR unterschiedlichen Acrylnitrilgehalts (Beispiel 1: Perbunan^{®} 1846; Beispiel 2: Perbunan^{®} 3431, Beispiel 3: Krynac^{®} 4975F; alles Handelsprodukte der Lanxess Deutschland GmbH) in Monochlorbenzol wurde in einem Edelstahlreaktor mit Thermostatisierung bei 30°C über einen Zeitraum von 3 h mit Ultraschall beschallt.

Als Quelle für die Schallenergie diente ein Gerät vom Typ UIP 1000 der Firma Dr. Hielscher, (Maximalleistung 1000 W, Frequenz 20 kHz, Sonotrode BS34 mit Durchmesser 34mm aus Titan, variable Amplitude). Als Amplitude wurden 50% der Maximalleistung gewählt.

Die in regelmäßigen Abständen genommenen Proben wurden mittels GPC charakterisiert hinsichtlich der molekularen Parameter. Die Ergebnisse sind in den Tabellen 1-3 dargestellt.

**Tabelle 1: Perbunan^{®} 1846**

| **(Mooney-Viskosität (ML 1+4 @100°C) 45 MU, Acrylnitril-Gehalt 18 Gew.%)** | | | |
|---|---|---|---|
| **Beschallungszeit (h)** | **Zahlenmittel Mₙ** | **Massenmittel M_{w}** | **Polydispersität D** |
| 0 (=Ausgangswert) | 111.000 | 348.000 | 3,1 |
| 1 | 89.000 | 144.000 | 1,6 |
| 2 | 81.000 | 121.000 | 1,5 |
| 3 | 74.000 | 106.000 | 1,4 |

**Tabelle 2: Perbunan^{®} 3431**

| **(Mooney-Viskosität (ML 1+4 @100°C) 30 MU, Acrylnitril-Gehalt 34 Gew.%)** | | | |
|---|---|---|---|
| **Beschallungszeit (h)** | **Zahlenmittel Mₙ** | **Massenmittel M_{w}** | **Polydispersität D** |
| 0 (=Ausgangswert) | 74.000 | 239.000 | 3,2 |
| 1 | 58.000 | 97.000 | 1,7 |
| 2 | 51.000 | 78.000 | 1,5 |
| 3 | 46.000 | 68.000 | 1,5 |

**Tabelle 3: Krynac^{®} 4975F**

| **(Mooney-Viskosität (ML 1+4 @100°C) 70 MU, Acrylnitril-Gehalt 49 Gew.%)** | | | |
|---|---|---|---|
| **Beschallungszeit (h)** | **Zahlenmittel Mₙ** | **Massenmittel M_{w}** | **Polydispersität D** |
| 0 (=Ausgangswert) | 80.000 | 193.000 | 2,4 |
| 1 | 62.000 | 94.000 | 1,5 |
| 2 | 54.000 | 83.000 | 1,5 |
| 3 | 51.000 | 75.000 | 1,5 |

### Beispiel 4: Emulsions-Styrol-Butadien-Kautschuk (ESBR)

160 g einer Lösung von 1 Gew.% ESBR (Krylene^{®} 1500, Styrolgehalt 23,5 Gew.%, Mooney-Viskosität (ML 1+4 @ 100°C) von 55 MU, Handelsprodukt der Lanxess Deutschland GmbH) in Toluol wurde analog Beispiel 1 behandelt. Die Ergebnisse sind in Tabelle 4 dargestellt.

**Tabelle 4:**

| **Beschallungszeit (h)** | **Zahlenmittel Mₙ** | **Massenmittel M_{w}** | **Polydispersität D** |
|---|---|---|---|
| 0 (=Ausgangswert) | 151.000 | 446.000 | 2,9 |
| 1 | 93.000 | 145.000 | 1,6 |
| 2 | 85.000 | 120.000 | 1,4 |
| 3 | 75.000 | 106.000 | 1,4 |

### Beispiel 5: Emulsions-Styrol-Butadien-Kautschuk (ESBR)

160 g einer Lösung von 1 Gew.% ESBR (Polymeranteil des ölverstreckten ESBR-Kautschuks Krynol^{®} 1721, Styrolgehalt 40 Gew.%, Mooney-Viskosität (ML 1+4 @100°C) ca. 110 MU, Handelsprodukt der Lanxess Deutschland GmbH) in Toluol wurde analog Beispiel 1 behandelt. Die Ergebnisse sind in Tabelle 5 dargestellt.

**Tabelle 5:**

| **Beschallungszeit (h)** | **Zahlenmittel Mₙ** | **Massenmittel M_{w}** | **Polydispersität D** |
|---|---|---|---|
| 0 (=Ausgangswert) | 211.000 | 756.000 | 3,6 |
| 1 | 114.000 | 165.000 | 1,4 |
| 2 | 91.000 | 127.000 | 1,4 |
| 3 | 81.000 | 111.000 | 1,4 |

### Beispiel 6: Chloropren-Kautschuk (CR)

160 g einer Lösung von 1 Gew.% CR-Kautschuk (Baypren^{®} 230, Mooney-Viskosität (ML 1+4 @ 100°C) von 102 MU, Handelsprodukt der Lanxess Deutschland GmbH) in Toluol wurde analog Beispiel 1 behandelt. Die Ergebnisse sind in Tabelle 6 dargestellt.

**Tabelle 6:**

| **Beschallungszeit (h)** | **Zahlenmittel Mₙ** | **Massenmittel M_{w}** | **Polydispersität D** |
|---|---|---|---|
| 0 (=Ausgangswert) | 265.000 | 765.000 | 2,9 |
| 1 | 101.000 | 136.000 | 1,3 |
| 2 | 84.000 | 109.000 | 1,3 |
| 3 | 74.000 | 97.000 | 1,3 |

### Beispiel 7: Etylen-Vinylacetat-Kautschuk (EVM)

160 g einer Lösung von 1 Gew.% EVM-Kautschuk (Levapren^{®} 700 HV, Mooney-Viskosität (ML 1+4 @ 100°C) von 27 MU, Handelsprodukt der Lanxess Deutschland GmbH) in Chlorbenzol wurde analog Beispiel 1 behandelt. Die Ergebnisse sind in Tabelle 7 dargestellt.

**Tabelle 7:**

| **Beschallungszeit (h)** | **Zahlenmittel Mₙ** | **Massenmittel M_{w}** | **Polydispersität D** |
|---|---|---|---|
| 0 (=Ausgangswert) | 87.000 | 314.000 | 3,6 |
| 1 | 81.000 | 132.000 | 1,6 |
| 2 | 60.000 | 103.000 | 1,7 |
| 3 | 60.000 | 93.000 | 1,5 |

### Beispiele 8-12: hydrierter Nitrilkautschuk (HNBR); (batch-Fahrweise)

### Beispiel 8:

160 g einer Lösung von 1 Gew.% HNBR (Therban^{®} 3446 (Lanxess Deutschland GmbH), Mooney-Viskosität (ML 1+4 @100°C) von 60 MU (bestimmt gemäß ASTM Norm D1646), Acrylnitril-Gehalt 34 Gew.%, Restdoppelbindungsgehalt (bestimmt durch IR-Spektroskopie) von 4%) in Monochlorbenzol wurden in einem Edelstahlreaktor mit Thermostatisierung bei 30°C über einen Zeitraum von 3 h mit Ultraschall beschallt.

Als Quelle für die Schallenergie diente ein Gerät vom Typ UIP 1000 der Firma Dr. Hielscher, (Maximalleistung 1000 W, Frequenz 20 kHz, Sonotrode BS34 mit Durchmesser 34mm aus Titan, variable Amplitude). Als Amplitude wurden 50% der Maximalleistung gewählt.

Die in regelmäßigen Abständen genommenen Proben wurden mittels GPC charakterisiert hinsichtlich der molekularen Parameter. Die Ergebnisse sind in Tabelle 8 dargestellt.

**Tabelle 8:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 68.000 | 126.000 | 1,9 |
| 2 | 61.000 | 104.000 | 1,7 |
| 3 | 56.000 | 91.000 | 1,6 |

### Beispiel 9:

Bei gleichen Einsatzstoffen und Bedingungen wie in Beispiel 8 wurde mittels eines Kryostaten die Temperatur auf 0°C abgesenkt. Die Ergebnisse sind in Tabelle 9 dargestellt.

**Tabelle 9:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 67.000 | 116.000 | 1,7 |
| 2 | 59.000 | 93.000 | 1,6 |
| 3 | 55.000 | 81.000 | 1,5 |

### Beispiele 10-12 (batch-Fahrweise)

Die gleichen apparativen Einstellungen wie in Beispiel 8 wurden bei einer Beschallungstemperatur von 40°C auf eine Lösung von 1 Gew.% (Beispiel 10), 3 Gew.% (Beispiel 11) und 5 Gew.% (Beispiel 12) des Therban^{®} 3446 angewandt. Die Ergebnisse sind in den nachfolgenden Tabellen 10-12 dargestellt.

**Tabelle 10: Konzentration des Therban®3446: 1 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 70.500 | 137.000 | 1,9 |
| 2 | 65.700 | 113.500 | 1,7 |
| 3 | 64.400 | 101.000 | 1,6 |

**Tabelle 11: Konzentration des Therban®3446: 3 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 80.000 | 162.000 | 2,0 |
| 2 | 76.000 | 140.000 | 1,8 |
| 3 | 74.000 | 125.000 | 1,7 |

**Tabelle 12: Konzentration des Therban®3446: 5 Gew.%**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 79.000 | 182.000 | 2,3 |
| 2 | 81.000 | 166.000 | 2,1 |
| 3 | 76.000 | 151.000 | 2,0 |

### Beispiel 13 hydrierter Nitrilkautschuk (HNBR); (Kreisfahrweise)

Bei den gleichen apparativen Einstellungen wie in Beispiel 8 wurde bei einer Beschallungstemperatur von 30°C eine Lösung von 1 Gew.% Therban^{®}3446 aus einem Vorratsgefäß durch einen Durchflußreaktor gepumpt und wieder in das Vorratsgefäß zurückgeführt. Dabei war das Volumen des Vorratsgefäßes das Vierfache des Volumens des Reaktionsraums. Die Umpumpgeschwindigkeit wurde so gewählt, daß sich eine einfache mittlere Verweilzeit von 0,25 h im Reaktionsraum einstellte. In regelmäßigen zeitlichen Abständen wurden dem Vorratsgefäß Proben entnommen und der Fortschritt der Abbaureaktion mittels GPC überprüft. Die Ergebnisse sind in Tabelle 13 dargestellt.

**Tabelle 13:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 0,5 | 77.000 | 177.000 | 2,3 |
| 1 | 70.000 | 158.000 | 2,2 |
| 2 | 76.000 | 147.000 | 1,9 |
| 3 | 71.000 | 134.000 | 1,9 |
| 4 | 72.000 | 125.000 | 1,7 |
| 5 | 68.000 | 119.000 | 1,7 |
| 6 | 66.000 | 112.000 | 1,7 |

### Beispiel 14: hydrierter Nitrilkautschuk (HNBR); (Kreisfahrweise)

Bei den gleichen apparativen Einstellungen und der gleichen Konfiguration wie in Beispiel 13 wurde eine Lösung von 5 Gew.% Polymer im Kreis durch einen Durchflußreaktor geführt. Die Amplitudeneinstellung der Ultraschallquelle wurde auf die Maximalleistung eingestellt. Die Umpumpgeschwindigkeit wurde so gewählt, daß sich eine einfache mittlere Verweilzeit von 1 min im Reaktionsraum einstellte. In regelmäßigen zeitlichen Abständen wurden dem Vorratsgefäß Proben entnommen und der Fortschritt der Abbaureaktion mittels GPC überprüft. Die Ergebnisse sind in Tabelle 14 dargestellt.

**Tabelle 14:**

| **Beschallungszeit (h)** | **Zahlenmittel Mₙ** | **Massenmittel M_{w}** | **Polydispersität D** |
|---|---|---|---|
| 0 (=Ausgangswert) | 81.000 | 264.000 | 3,2 |
| 0,75 | 81.000 | 194.000 | 2,4 |
| 2 | 79.000 | 182.000 | 2,3 |
| 3 | 74.000 | 169.000 | 2,3 |
| 4 | 82.000 | 164.000 | 2,0 |
| 5 | 72.000 | 155.000 | 2,2 |
| 6 | 79.000 | 152.000 | 1,9 |
| 7 | 76.000 | 146.000 | 1,9 |

### Beispiel 15: hydrierter Nitrilkautschuk (HNBR); (1-Kessel kontinuierliche Fahrweise)

Bei den gleichen apparativen Einstellungen wie in Beispiel 8 wurden bei einer Beschalltemperatur von 30°C eine Lösung von 1 Gew.% Therban^{®}3446 aus einem Vorratsgefäß durch einen Durchflußreaktor gepumpt und dann separat gesammelt. Ein solcher Aufbau entspricht einer 1 Kessel Konti-Anlage. Die Pumpgeschwindigkeit wurde so gewählt, daß sich eine einfache mittlere Verweilzeit von 15 min im Reaktionsraum einstellte. Das Ergebnis ist in Tabelle 15 dargestellt

**Tabelle 15:**

| **Beschallungszeit (h)** | **Zahlenmittel Mₙ** | **Massenmittel M_{w}** | **Polydispersität D** |
|---|---|---|---|
| 0 (=Ausgangswert) | 81000 | 264000 | 3,2 |
| 0,25 | 79000 | 201000 | 2,5 |

### Beispiel 16: hydrierter Nitrilkautschuk (HNBR); (Simulation einer kontinuierlichen Fahrweise mit 6-Kesseln in Serie)

Bei den gleichen apparativen Einstellungen wie in Beispiel 8 wurden bei einer Beschalltemperatur von 30°C eine Lösung von 1 Gew.% Therban^{®}3446 aus einem Vorratsgefäß durch einen Durchflußreaktor gepumpt und dann separat gesammelt. Die erhaltene Lösung wurde erneut durch den Reaktor geführt und vereinheitlicht. Dieser Vorgang wurde insgesamt sechsmal durchgeführt. Eine solche Vorgehensweise stellt eine Simulation einer 6-Kessel kontinuierlichen Anlage dar und liefert das gleiche Verweilzeitspektrum der einzelnen Volumenelemente. Die Pumpgeschwindigkeit wurde so gewählt, daß sich eine einfache mittlere Verweilzeit von 15 min im Reaktionsraum einstellte. Nach jedem Durchlauf wurde eine Probe entnommen und mittels GPC charakterisiert. Die Ergebnisse sind in Tabelle 16 dargestellt.

**Tabelle 16:**

| **Anzahl der Zyklen** | **Zahlenmittel Mₙ** | **Massenmittel M_{w}** | **Polydispersität D** |
|---|---|---|---|
| 0 (=Ausgangswert) | 81.000 | 264.000 | 3,2 |
| 1 | 79.000 | 201.000 | 2,5 |
| 2 | 77.000 | 173.000 | 2,2 |
| 3 | 79.000 | 159.000 | 2,0 |
| 4 | 77.000 | 150.000 | 2,0 |
| 5 | 75.000 | 142.000 | 1,9 |
| 6 | 73.000 | 137.000 | 1,9 |

## Patentansprüche

1. Verfahren zur Herstellung eines synthetischen Kautschuks (B), **dadurch gekennzeichnet, dass** man einen synthetischen Kautschuks (A) der Einwirkung von Ultraschall aussetzt, wobei der erhaltene synthetischen Kautschuk (B) ein niedrigeres Gewichtsmittel des Molekulargewichts (M_{w}) besitzt als der synthetischen Kautschuk (A).

2. Verfahren gemäß Anspruch 1, wobei man als synthetischen Kautschuk (A) BR (Polybutadien), ABR (Butadien-Acrylsäure-C₁₋₄-alkylester-Copolymere), IR (Polyisopren), SBR (statistische Styrol-Butadien-Copolymere), X-SBR (carboxylierte Styrol-Butadien-Copolymere), FKM (Fluorkautschuk), ACM (Acrylatkautschuk), NBR (Nitrilkautschuke), HNBR (teilweise oder vollständig hydrierte Nitrilkautschuke), XNBR (carboxylierte Nitrilkautschuke), HXNBR (teilweise oder vollständig hydrierte carboxylierte Nitrilkautschuke), CR (Polychloropren), IIR (Isobutylen-Isopren-Copolymere), BIIR (bromierte Isobutylen-Isopren-Copolymere), CIIR (chlorierte Isobutylen-Isopren-Copolymere), EPDM (Ethylen-Propylen-Dien-Copolymere), EAM (Ethylen-Acrylat-Copolymere), EVM (Ethylen-Vinylacetat-Copolymere), CO und ECO (Epichlorhydrinkautschuke), Q (Silikonkautschuke), AU (Polyesterurethanpolymerisate), EU (Polyetherurethanpolymerisate), ENR (Epoxydierter Naturkautschuk) oder Mischungen davon.

3. Verfahren gemäß Anspruch 1 oder 2, wobei die synthetischen Kautschuke (A) ein Gewichtsmittel des Molekulargewicht M_{w} im Bereich von 200.000 bis 1.000.000, bevorzugt im Bereich von 200.000 bis 400.000 und insbesondere bevorzugt im Bereich von 200.000 bis 300.000 sowie eine Polydispersität D= M_{w}/Mₙ im Bereich von 1,9 bis 6, bevorzugt im Bereich von 2,2 bis 5 und insbesondere im Bereich von 2,5 bis 4 besitzen.

4. Verfahren gemäß einem oder mehreren der Ansprüche 1 bis 3, wobei Ultraschall einer Frequenz von mindestens 18 kHz, bevorzugt im Bereich von 18 bis 30 kHz und insbesondere im Bereich von 19 und 25 kHz eingesetzt wird.

5. Verfahren gemäß einem oder mehreren der Ansprüche 1 bis 4, wobei der Energieeintrag durch den Ultraschall durch Eintauchen einer Sonotrode in eine Lösung des synthetischen Kautschuks (A) in einem Lösungsmittel erfolgt.

6. Verfahren gemäß einem oder mehreren der Ansprüche 1 bis 5, wobei als Lösungsmittel für den synthetischen Kautschuks (A) Dichlormethan, Benzol, Toluol, Cyclohexan oder Monochlorbenzol verwendet wird.

7. Verfahren gemäß einem oder mehreren der Ansprüche 1 bis 6, wobei es diskontinuierlich oder kontinuierlich durchgeführt wird.

8. Verfahren gemäß einem oder mehreren der Ansprüche 1 bis 7, wobei es bei einer Temperatur im Bereich von -30 bis 100°C, vorzugsweise von -20 bis 50°C durchgeführt wird.

9. Synthetischer Kautschuk ausgewählt aus der Gruppe bestehend aus Nitrilkautschuken (NBR), hydrierten Nitrilkautschuken (HNBR), Ethylen-Vinylacetat-Copolymeren (EVM), EPDM Kautschuken, Emulsions-Styrol-Butadien-Kautschuk (ESBR), Chloropren-Kautschuken (CR), Polybutadien-Kautschuken (BR), Acrylat-Kautschuken (ACM), Fluorkautschuken (FKM), IIR und Halo IIR, bevorzugt BIIR und CIIR, mit einer Polydispersität D = M_{w}/Mₙ, die kleiner oder gleich als 2, bevorzugt kleiner 2, besonders bevorzugt kleiner als 1,9 und ganz besonders bevorzugt kleiner als 1,7 ist.

10. Synthetischer Kautschuk gemäß Anspruch 9, **dadurch gekennzeichnet, dass** die Polydispersität D = M_{w}/Mₙ größer als 1 und kleiner als 2 ist, bevorzugt größer als 1 und kleiner als 1, 9 und besonders bevorzugt größer als 1 und kleiner als 1,7 ist

11. Synthetischer Kautschuk gemäß Anspruch 9 oder 10, wobei er ein Gewichtsmittel des Molekulargewichts Mw im Bereich von 30.000 bis 250.000, bevorzugt im Bereich von 30.000 bis 150.000 und insbesondere bevorzugt im Bereich von 30 000 bis 100 000 aufweist.

12. Synthetischer Kautschuk gemäß einem oder mehreren der Ansprüche 9 bis 11, wobei die Mooney-Viskosität (ML 1+4 @ 100 °C) im Bereich von 1 bis 50, bevorzugt im Bereich von 10 bis 40 liegt.

13. Verwendung des synthetischen Kautschuks gemäß einem oder mehreren der Ansprüche 9 bis 12 zur Herstellung von Formteilen, bevorzugt durch Extrusions- oder Spritzgussverfahren.

14. Verwendung gemäß Anspruch 13 zur Herstellung von Dichtungen, Schläuchen, Dämpfungselementen, Statoren oder Kabelmänteln.

15. Formteile enthaltend einen synthetischen Kautschuk gemäß einem oder mehreren der Ansprüche 9 bis 12.

16. Verwendung des synthetischen Kautschuks gemäß einem oder mehreren der Ansprüche 9 bis 12 zur Herstellung von Reifen.

17. Reifen enthaltend einen synthetischen Kautschuk gemäß einem oder mehreren der Ansprüche 9 bis 12.
